(19) Europäisches Patentamt
European Patent Office
Office européen des brevets

(11) EP 1 143 548 A2

(12) EUROPÄISCHE PATENTANMELDUNG

(43) Veröffentlichungstag:
**10.10.2001 Patentblatt 2001/41**

(51) Int Cl.[7]: **H01M 10/40**, C07F 9/02

(21) Anmeldenummer: **01105497.0**

(22) Anmeldetag: **15.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **05.04.2000 DE 10016801**

(71) Anmelder: **MERCK PATENT GmbH**
**64293 Darmstadt (DE)**

(72) Erfinder:
- **Heider, Udo, Dr.**
  **64560 Riedstadt (DE)**
- **Schmidt. Michael, Dr.**
  **64342 Seeheim-Jugenheim (DE)**
- **Kühner, Andreas, Dr.**
  **64289 Darmstadt (DE)**
- **Petigk, Dagmar**
  **65428 Rüsselsheim (DE)**

(54) **Lithiumsalze, Verfahren zu deren Herstellung, nichtwäsriger Elektrolyt sowie elektrochemische Zelle**

(57) Die Erfindung betrifft Lithiumsalze der allgemeinen Formel (I)

$$Li[P(OR^1)_a(OR^2)_b(OR^3)_c(OR^4)_dF_e] \quad (I)$$

worin $0 < a+b+c+d \leq 5$ und $a+b+c+d+e = 6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, ausgenommen Lithiumperfluorpinakolyl-tetrafluorphosphonat (V).

Die Erfindung betrifft ferner ein Verfahren zur Herstellung solcher Lithiumsalze durch Umsetzung einer Phosphor(V)-Verbindung der allgemeinen Formel (II)

$$P(OR^1)_a(OR^2)_b(OR^3)_c(OR^4)_dF_e \quad (II)$$

worin $0 < a+b+c+d \leq 5$ und $a+b+c+d+e = 5$ gilt, und $R^1$ bis $R^4$ die oben angegebenen Bedeutungen aufweisen, mit Lithiumfluorid in Gegenwart eines organischen Lösungsmittels.

Die erfindungsgemäßen Lithiumsalze besitzen hohe Oxidationspotentiale und eignen sich für nichtwässrige Elektrolyte elektrochemischer Zellen, insbesondere Lithiumionen-Batterien mit hoher elektrochemischer Stabilität.

EP 1 143 548 A2

## Beschreibung

Die vorliegenden Erfindung betrifft neue Lithiumsalze, ein Verfahren zu deren Herstellung, einen nichtwässrigen Elektrolyten, welcher solche Lithiumsalze enthält, eine elektrochemische Zelle mit einem solchen nichtwässrigen Elektrolyten, sowie die Verwendung der Lithiumsalze als Additiv für Lithiumionen-Batterien.

Üblicherweise werden in Lithiumionen-Batterien bzw. Lithium-Sekundärbatterien fluorhaltige Li-Salze als Leitsalze des Elektrolyten eingesetzt. Das als Li-Salz am häufigsten eingesetzte $LiPF_6$ ist jedoch darin nachteilig, dass es eine starke hydrolyseempfindliche und thermisch instabile Substanz ist. Im Kontakt mit feuchter Luft bzw. mit Restwasser, das beispielsweise aus den im Elektrolyten ebenfalls vorhandenen Lösungsmitteln stammt, wird unter anderem Fluorwasserstoffsäure (HF) gebildet. Neben den toxischen Eigenschaften wirkt HF sehr negativ auf das Zyklenverhalten und somit die Leistungsfähigkeit des Batteriesystems, da Metalle, insbesondere Mangan, aus den verwendeten Elektroden herausgelöst werden können.

Zur Vermeidung dieser Nachteile wurden alternative Li-Verbindungen vorgeschlagen, beispielsweise Lithiumimide, insbesondere Lithium[bis(trifluormethylsulfonyl)imid] gemäß US-A-4 505 997 oder Lithiummethanide, insbesondere Lithium[tris(trifluormethylsulfonyl)methanid] gemäß US-A-5 273 840. Diese Salze besitzen eine hohe anodische Stabilität und bilden in organischen Carbonaten Lösungen mit hoher Leitfähigkeit. Jedoch wird Aluminium, das üblicherweise als kathodischer Stromableiter in Lithiumionen-Batterien eingesetzt wird, zumindest von Lithiumimid in nicht ausreichendem Maße passiviert. Lithiummethanid hingegen lässt sich nur mit sehr großem Aufwand herstellen und reinigen. Die Verwendung von unreinem Lithiummethanid bedingt jedoch eine Verschlechterung der elektrochemischen Eigenschaften hinsichtlich Oxidationsstabilität und Passivierung von Aluminium.

Als weitere Alternativen wurden gemäß EP 0 698 301 Lithiumspiroborate bzw. gemäß Elektrochemical and Solid-State Letters, 2(2) 60-62 (1999) Lithiumspirophosphate vorgeschlagen. Aufgrund der Verwendung von zweizähnigen Liganden, wie z.B. Brenzcatechin, besitzen diese Salze hohe thermische Zersetzungspunkte von teilweise über 200 °C, Mit Oxidationspotentialen von maximal 4,3 V gegen $Li/Li^+$ ist die elektrochemische Stabilität dieser Salze jedoch nicht ausreichend für den Einsatz in Lithiumionen-Batterien mit hochoxidierenden Elektrodenmaterialien, wie $LiMn_2O_4$ oder $LiCo_{1-x}Ni_xO_2$ (0<x<1).

Der vorliegenden Erfindung liegt daher die Aufgabe zugrunde, Lithiumsalze vorzusehen, die sich unter Vermeidung der im Stand der Technik bekannten Nachteile als Leitsalze für Elektrolyte zur Anwendung in elektrochemischen Zellen, insbesondere Lithiumionen-Batterien, eignen.

Diese Aufgabe wird erfindungsgemäß durch die Leitsalze gemäß Anspruch 1, ein Verfahren zu deren Herstellung gemäß Anspruch 6, einen nichtwässrigen Elektrolyten gemäß den Ansprüchen 10 und 11, eine elektrochemische Zelle gemäß Anspruch 12 sowie die Verwendung gemäß Anspruch 13 gelöst. Vorteilhafte bzw. bevorzugte Ausführungsformen des Anmeldungsgegenstandes sind in den Unteransprüchen angegeben.

Gegenstand der Erfindung sind somit Lithiumsalze der allgemeinen Formel (I)

$$Li[P(OR^1)_a(OR^2)_b(OR^3)_c(OR^4)_dF_e] \qquad (I)$$

worin $0 < a+b+c+d \leq 5$ und $a+b+c+d+e = 6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, ausgenommen Lithium-perfluorpinakolyltetrafluorphosphonat entsprechend Formel (V).

In Chem. Ber. (1978), 111(9), 3105-11 werden Reaktionen eines N-silylierten Iminophosphins mit perfluorierten Ketonen beschrieben. Bei einer dieser Reaktionen wird als Nebenprodukt Lithium-perfluorpinakolyltetrafluorphosphonat (V) gebildet, ohne jedoch dessen Eigenschaften oder Verwendungsmöglichkeiten zu beschreiben.

Die Arylreste für $R^1$ bis $R^4$ in der obigen Formel (I) sind vorzugsweise aus der Phenyl-, Naphthyl-, Anthracenyl- und Phenanthrenylreste umfassenden Gruppe gewählt. Die Heteroarylreste für $R^1$ bis $R^4$ in der obigen Formel (I) sind vorzugsweise aus der Pyridyl-, Pyrazyl- und Pyrimidylreste umfassenden Gruppe gewählt.

Die genannten Alkyl-, Aryl- und Heteroarylreste für $R^1$ bis $R^4$ können mindestens einen Halogensubstituenten, insbesondere Fluor, Chlor oder Brom aufweisen. Die Alkylreste enthalten beispielsweise 1 bis 10, insbesondere 1 bis 6 Kohlenstoffatome. Die Alkylreste können gerad- oder verzweigtkettig sein. Die Aryl- und Heteroarylreste enthalten beispielsweise bis zu 10, insbesondere bis zu 6 Kohlenstoffatome.

Die Aryl- und Heteroarylreste können ebenso durch mindestens einen Alkylsubstituenten mit beispielsweise 1 bis 6 Kohlenstoffatomen substituiert sein.

Gemäß der Erfindung hat sich überraschenderweise gezeigt, dass die oben beschriebenen Lithiumsalze eine sehr hohe elektrochemische Stabilität aufweisen. Ferner lassen sich mit solchen Lithiumsalzen bei Verwendung als Leitsalze in Elektrolyten sehr hohe Oxidationspotentiale von über 5,5 V gegen $Li/Li^+$ erzielen. Insbesondere bei Verwendung von Liganden, die von fluorierten organischen Diolen, wie Perfluorpinakol, abgeleitet sind, werden Lithiumsalze mit sehr hoher thermischer Stabilität erhalten.

Gegenstand der Erfindung ist ebenso ein Verfahren zur Herstellung von Lithiumsalzen der oben beschriebenen allgemeinen Formel (I) durch Umsetzung einer Phosphor(V)-Verbindung der allgemeinen Formel (II)

$$P(OR^1)_a(OR^2)_b(OR^3)_c(OR^4)_dF_e \quad (II)$$

worin $0 < a+b+c+d \leq 5$ und $a+b+c+d+e = 5$ gilt, und $R^1$ bis $R^4$ die oben angegebenen Bedeutungen aufweisen, mit Lithiumfluorid in Gegenwart eines organischen Lösungsmittels.

Die erfindungsgemäße Umsetzung wird vorzugsweise bei Temperaturen im Bereich von -20-60 °C, insbesondere bevorzugt 20-25 °C, vorzugsweise während eines Zeitraums von 0,5-96 Stunden, insbesondere vorzugsweise etwa 24 Stunden, durchgeführt.

Die erfindungsgemäße Umsetzung erfolgt in Gegenwart von organischen Lösungsmitteln, welche vorzugsweise aus der Dimethylcarbonat, Diethylcarbonat, Propylencarbonat, Ethylencarbonat, Methylethylcarbonat, Methylpropylcarbonat, γ-Butyrolacton, Methylacetat, Ethylacetat, Methylpropionat, Ethylpropionat, Methylbutyrat, Ethylbutyrat, Dimethylsulfoxid, Dioxolan, Sulfolan, Acetonitril, Acrylnitril, Dimethoxyethan, 1,2-Butylencarbonat, 2,3-Butylencarbonat, 1,3-Dioxan, Aceton und Mischungen hiervon umfassenden Gruppe gewählt werden. Besonders bevorzugt ist die Verwendung von Mischungen von cyclischen und acyclischen Lösungsmitteln, z.B. Ethylencarbonat mit offenkettigen Carbonaten. Insbesonders bevorzugt sind Mischungen aprotischer Lösungsmittel, wie Ethylencarbonat und Diethylcarbonat und/oder Ethylmethylcarbonat.

Anders als bei der Synthese von $LiPF_6$, bei der hochreines, in großen Mengen schlecht verfügbares $PF_5$-Gas verwendet wird, werden zur Herstellung der erfindungsgemäßen Lithiumsalze als Vorstufen im allgemeinen flüssige bzw. feste Verbindungen der oben angegebenen Formel (II) verwendet, welche leicht zu reinigen sind, beispielsweise durch Destillation oder Umkristallisation.

Verbindungen der Formel (II) werden beispielsweise in der o. a. Literaturstelle Chem. Ber. (1978), 111(9), 3105-11; sowie in Houben-Weyl, Methoden der organischen Chemie, Phosphorverbindungen I u. folgende; in Zeitung Anorg . Allg. Chemie, Band Nr. 533 (1986), 18-22 oder in Zeitung Naturforschung, Band 33b (1978), 131-135 beschrieben.

Die Herstellung der erfindungsgemäßen Lithiumsalze wird in üblichen Glas- oder Kunststoffgefäßen vorzugsweise in einem aus Polytetrafluorethylen (PTFE) bestehenden Reaktionsgefäß durchgeführt.

Gegenstand der Erfindung ist ferner ein nichtwässriger Elektrolyt für eine elektrochemische Zelle, Kondensator, Superkondensator, prim. und sekundäre Batterien, vorzugsweise Li-Ionen-Batterien, welcher mindestens ein Lithiumsalz der oben angegebenen Formel (I) einschließlich Lithiumperfluorpinakolyl-tetrafluor-phosphonat (V) als Leitsalz oder Additiv sowie wahlweise mindestens ein organisches Lösungsmittel umfasst.

Gegenstand der Erfindung ist auch ein Polymer- bzw. Gelelektrolyt für eine elektrochemische Zelle, welcher mindestens ein Lithiumsalz der Formel (I) einschließlich Lithium-perfluorpinakolyl-tetrafluorphosphonat (V) als Leitsalz oder Additiv enthält.

Gegenstand der Erfindung ist ebenso ein nichtwässriger Elektrolyt für eine elektrochemische Zelle, Kondensator, Superkondensator, prim. und sekundäre Batterien, vorzugsweise Li-Ionen-Batterien, welcher das beim erfindungsgemäßen Verfahren direkt anfallende Reaktionsgemisch umfasst. Diese Ausführungsform ist besonders vorteilhaft, da es hierbei nicht notwendig ist, das beim erfindungsgemäßen Verfahren anfallende Lithiumsalz von dem Lösungsmittel abzutrennen, sondern das Lithiumsalz und Lösungsmittel, insbesondere aprotisches Lösungsmittel umfassende Reaktionsgemisch kann direkt der Verwendung als Elektrolyt beispielsweise in einer Lithiumionen-Batterie zugeführt werden.

Die beiliegende Zeichnung dient der weiteren Erläuterung der Erfindung. Hierbei zeigen

Fig. 1 ein Zyklovoltammogramm der in Beispiel 2 durchgeführten Messung: und

Fig. 2 ein Zyklovoltammogramm der in Beispiel 4 durchgeführten Messung.

Der erfindungsgemäße nichtwässrige Elektrolyt eignet sich insbesondere zur Verwendung in Lithiumionen-Batterien mit einer Übergangsmetallkathode.

Gegenstand der Erfindung ist ebenso eine elektrochemische Zelle, umfassend eine Anode, eine Kathode und einen dazwischen angeordneten, erfindungsgemäßen Elektrolyten.

Gegenstand der Erfindung ist schließlich die Verwendung eines Lithiumsalzes der oben angegebenen Formel (I) einschließlich Lithiumperfluorpinakolyl-tetrafluorphosphonat(V) oder eines nach dem erfindungsgemäßen Verfahren erhaltenen Lithiumsalzes als Additiv in Elektrolyten für Lithiumionen-Batterien.

Die Additive können in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3CF_2SO_2)_2$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

| | |
|---|---|
| m und p | 0, 1, 2, 3 oder 4 mit m+p=4 und |
| $R^1$ und $R^2$ | gleich oder verschieden sind, |

gegebenenfalls durch eine Einfach- oder Doppelbindung direkt miteinander verbunden sind,

jeweils einzeln oder gemeinsam die Bedeutung eines aromatischen oder aliphatischen Carbon-, Dicarbon- oder Sulfonsäurerestes haben, oder jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder

jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder

jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

haben und

Hal F, Cl oder Br

und

A Alkyl mit 1 bis 6 C-Atomen, das ein- bis dreifach halogeniert

sein kann, bedeuten. Ebenso geeignet sind Alkalialkoholate der allgemeinen Formel

$$Li^+ OR^-$$

sind, worin R

die Bedeutung eines aromatischen oder aliphatischen Carbon-, Dicarbon- oder Sulfonsäurerestes hat, oder

die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder

die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder

die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

hat und

Hal F, Cl, oder Br,

und

A Alkyl mit 1 bis 6 C-Atomen, das ein- bis dreifach halogeniert sein kann.

Auch Lithiumkomplexsalze der Formel

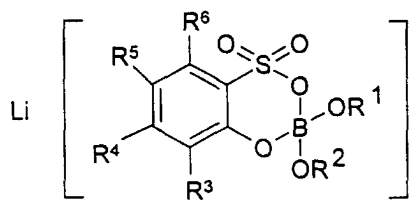

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$), Alkyloxy ($C_1$ bis $C_6$) oder Halogen (F, Cl, Br)

2. ein aromatischer Ring aus den Gruppen
Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,

Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

$$[([R^1(CR^2R^3)_k]_lA_x)_yKt]^+ \quad ^-N(CF_3)_2$$

wobei

| | |
|---|---|
| Kt= | N, P, As, Sb, S, Se |
| A= | N, P, P(O), O, S, S(O), $SO_2$, As, As(O), Sb, Sb(O) |

$R^1$, $R^2$ und $R^3$ gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein, die an Kt gebundenen Gruppen können gleich oder verschieden sein mit

n= 1-18
m= 3-7
k= 0, 1-6
l= 1 oder 2 im Fall von x=1 und 1 im Fall x=0
x= 0,1
y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^+ \quad {}^{-}E$$

wobei

Kt, A, $R^1$, $R^2$, $R^3$, k, l, x und y die oben angegebene Bedeutung haben und
$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird. s

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9, |

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

x, y 1, 2, 3, 4, 5, 6

$M^{x+}$ ein Metallion

E eine Lewis-Säure, ausgewählt aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid,-Methanid oder -Triflat, können verwendet werden.

Auch Boratsalze (DE 199 59 722) der allgemeinen Formel

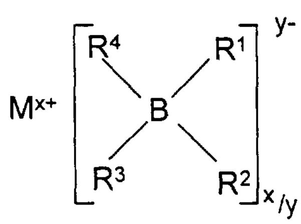

worin

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die Additive können auch in Elektrolyte eingesetzt werden, die Lithiumfluoralkylphosphate der allgemeinen Formel enthalten:

$$Li^{+}[PF_{x}(C_{y}F_{2y+1-z}H_{z})_{6-x}]^{-}$$

worin

$1 \leq x \leq 5$
$3 \leq y \leq 8$
$0 \leq z \leq 2y + 1$

bedeuten und die Liganden ($C_yF_{2y+1-z}H_z$) gleich oder verschieden sein können, wobei die Verbindungen der allgemeinen Formel,

$$Li^{+}[PF_{a}(CH_{b}F_{c}(CF_{3})_{d})_{e}]^{-}$$

in der a eine ganze Zahl von 2 bis 5, b = 0 oder 1, c = 0 oder 1, d = 2 und e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten der oben angegebenen Formel ist dadurch gekennzeichnet, daß wenigstens eine Verbindung der allgemeinen Formel

$$H_{m}P(C_{n}H_{2n+1})_{3-m},$$

$$OP(C_{n}H_{2n+1})_{3},$$

$$Cl_{m}P(C_{n}H_{2n+1})_{3-m},$$

$$F_{m}P(C_{n}H_{2n+1})_{3-m},$$

$$Cl_{o}P(C_{n}H_{2n+1})_{5-o},$$

$$F_{o}P(C_{n}H_{2n+1})_{5-o},$$

in denen jeweils
$0 \leq m \leq 2$, $3 \leq n \leq 8$ und $0 \leq o \leq 4$ bedeutet,
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Auch Ionische Flüssigkeiten der allgemeinen Formel

$$K^{+}A^{-}$$

worin bedeuten:

$K^+$ ein Kation ausgewählt aus der Gruppe

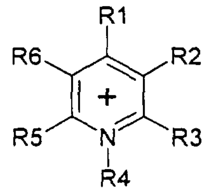

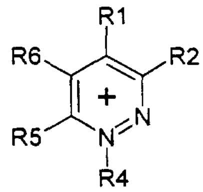

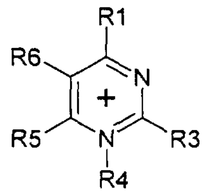

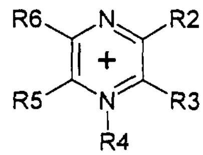

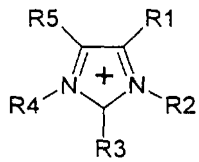

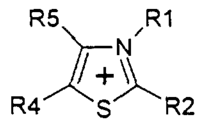

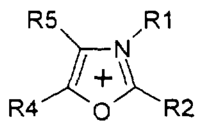

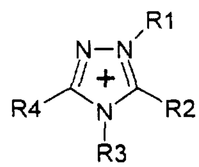

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und

$A^-$ ein Anion ausgewählt aus der Gruppe
$[B(OR^1)_n(OR^2)_m(OR^3)_o(OR^4)_p]^-$

mit

0≤n, m, o, p≤4 und
m+n+o+p=4

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam

die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit 1<n<6 und 0<x≤13 oder Halogen (F, Cl, Br) substituiert sein kann, besitzen,

die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder Halogen oder Halogen (F, Cl, Br) substituiert sein kann, besitzen,

die Bedeutung eines Alkylrests ($C_1$ bis $C_8$) der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen,

beziehungsweise $OR^1$ bis $OR^4$

einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl, , N $(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und

1≤x<6
1 ≤ y ≤ 8 und
0≤ z ≤ 2y+1

können enthalten sein (DE 100 279 95).

Die erfindungsgemäßen Verbindungen können auch in Elektrolyten enthalten sein mit Verbindungen folgender Formel:

$$NR^1R^2R^3$$

worin

$R^1$ und $R^2$ H, $C_yF_{2y+1-z}H_z$ oder $(C_nF_{2n-m}H_m)X$, wobei X ein aromatischer oder heterozyklischer Rest ist, bedeuten und

$R^3$ $(C_nF_{2n-m}H_m)Y$, wobei Y ein heterozyklischer Rest ist, oder $(C_oF_{2o-p}H_p)Z$, wobei Z ein aromatischer Rest ist, bedeutet,

und wobei n, m, o, p, y und z die folgenden Bedingungen erfüllen:

0 ≤ n ≤ 6,
0 ≤ m ≤ 2n,
2 ≤ o ≤ 6,
0 ≤ p ≤ 2o
1 ≤ y ≤ 8 und
0 ≤ z ≤ 2y+1,

zur Verringerung des Säuregehalts in aprotischen Elektrolytsystemen in elektrochemischen Zellen.
Auch Fluoralkylphosphate der allgemeinen Formel

$$M^{n+}[PF_x(C_yF_{2y+1-z}H_z)_{6-x}]_n^-$$

worin

$1 \le x \le 6$
$1 \le y \le 8$
$0 \le z \le 2y + 1$
$1 \le n \le 3$ und

$M^{n+}$ die Bedeutung eines ein- bis dreiwertigen Kations besitzt, insbesondere:

$NR^1R^2R^3R^4$,
$PR^1R^2R^3R^4$,
$P(NR^1R^2)_kR^3_mR^4_{4-k-m}$ (mit k=1-4, m=0-3 und k+m≤4),
$C(NR^1R^2)(NR^3R^4)(NR^5R^6)$,
$C(Aryl)_3$, Rb oder Tropylium

mit

$R^1$ bis $R^8$ H, Alkyl und Aryl ($C_1$-$C_8$) die teilweise durch F, Cl oder Br substituiert sein können,

wobei $M^{n+} = Li^+$, $Na^+$, $Cs^+$, $K^+$ und $Ag^+$ ausgenommen sind, können enthalten sein. Diese Fluoralkylphosphate sind erhältlich indem Phosphorane mit einem Fluorid oder Metallfluoralkylphosphate mit einem Fluorid oder Chlorid in organischen aprotischen Lösungsmitteln umgesetzt werden (DE 100 388 58).

Der Elektrolyt kann auch ein Gemisch enthalten, daß

a) wenigstens ein Lithiumfluoroalkylphosphat-Salz der allgemeinen Formel

$$Li^+ [PF_x(C_yF_{2y+1-z}H_z)_{6-x}]^-$$

worin

$1 \le x \le 5$
$1 \le y \le 8$ und
$0 \le z \le 2y + 1$

bedeuten und die Liganden $(C_yF_{2y+1-z}H_z)$ jeweils gleich oder verschieden sind und
b) wenigstens ein Polymeres (DE 100 58 264) enthält.
Im Elektrolyten können auch Tetrakisfluoroalkylborat-Salze der allgemeinen Formel

$$M^{n+} ([BR_4]^-)_n$$

worin

$M^{n+}$ ein einwertiges, zweiwertiges oder dreiwertiges Kation ist,

die Liganden R jeweils gleich sind und für $(C_xF_{2x+1})$ mit $1 \le x \le 8$ stehen und n = 1, 2 oder 3 ist (DE 100 558 11) enthalten sein. Das Verfahren zur Herstellung von Tetrakisfluoroalkylborat-Salzen ist dadurch gekennzeichnet, daß wenigstens eine Verbindung der allgemeinen Formel $M^{n+} ([B(CN)_4]^-)_n$ worin $M^{n+}$ und n die oben angegebene Bedeutung haben, durch Umsetzung mit wenigstens einem Fluorierungsmittel in wenigstens einem Lösungsmittel fluoriert und die so erhaltene fluorierte Verbindung nach den üblichen Methoden gereinigt und isoliert wird.

Der Elektrolyt kann auch Boratsalze der allgemeinen Formel

$$M^{n+} [BF_x(C_yF_{2y+1-z}H_z)_{4-x}]_n^-$$

enthalten, worin bedeuten:
$1<x<3$, $1 \le y \le 8$ und $0 \le z \le 2y+1$ und

M ein- bis dreiwertiges Kation ($1 \leq n \leq 3$), außer Kalium und Barium, insbesondere:
Li,
$NR^1R^2R^3R^4$, $PR^5R^6R^7R^8$, $P(NR^5R^6)_kR^7_mR^8_{4-k-m}$ (mit k=1-4, m=0-3 und $k+m \leq 4$) oder
$C(NR^5R^6)(NR^7R^8)(NR^9R^{10})$, wobei
$R^1$ bis $R^4$ $C_yF_{2y+1-z}H_z$ und
$R^5$ bis $R^{10}$ H oder $C_yF_{2y+1-z}H_z$ oder

ein aromatisches heterozyklisches Kation, insbesondere Stickstoff- und/oder Sauerstoff- und/oder Schwefelhaltige aromatische heterozyklische Kationen (DE 101 031 89). Das Verfahren zur Herstellung dieser Verbindungen ist dadurch gekennzeichnet, daß

a) $BF_3$-Lösungsmittel-Komplexe 1:1 mit Alkyllithium unter Kühlung umgesetzt werden, nach langsamer Erwärmung das Lösungsmittel zu einem Großteil entfernt und anschließend der Feststoff abfiltriert und mit einem geeigneten Lösungsmittel gewaschen wird, oder

b) Lithiumsalze in einem geeigneten Lösungsmittel 1:1 mit $B(CF_3)F_3$-salzen umgesetzt werden, bei erhöhter Temperatur gerührt und nach Entfernen des Lösungsmittels das Reaktionsgemisch mit aprotischen nichtwäßrigen Lösungsmitteln, vorzugsweise mit Lösungsmitteln die in elektrochemischen Zellen verwendet werden, versetzt und getrocknet wird, oder

c) $B(CF_3)F_3$-salze 1:1 bis 1:1,5 mit Lithiumsalzen in Wasser bei erhöhter Temperatur umgesetzt und 0,5 bis 2 Stunden am Siedepunkt erhitzt werden, das Wasser entfernt und das Reaktionsgemisch mit aprotischen nichtwäßrigen Lösungsmitteln, vorzugsweise mit Lösungsmitteln die in elektrochemischen Zellen verwendet werden, versetzt getrocknet wird.

Im Elektrolyten können auch Fluoroalkylphosphat-Salze der allgemeinen Formel

$$M^{n+} ([PF_x(C_yF_{2y+1-z}H_z)_{6-x}]^-)_n$$

enthalten sein, worin

$M^{n+}$ ein einwertiges, zweiwertiges oder dreiwertiges Kation ist,
$1 \leq x \leq 5$,
$1 \leq y \leq 8$ und
$0 \leq z \leq 2y + 1$ sind, n = 1, 2 oder 3 bedeuten und die Liganden $(C_yF_{2y+1-z}H_z)$ jeweils gleich oder verschieden sind, wobei die Fluoroalkylphosphat-Salze, in denen $M^{n+}$ ein Lithium-Kation ist, sowie die Salze

$$M^+([PF_4(CF_3)_2]^-)$$

mit $M^+ = Cs^+$, $Ag^+$ oder $K^+$,

$$M^+([PF_4(C_2F_5)_2]^-)$$

mit $M^+ = Cs^+$,

$$M^+([PF_3(C_2F_5)_3]^-)$$

mit $M^+ = Cs^+$, $K^+$, $Na^+$ oder para-$Cl(C_6H_4)N_2^+$,

$$M^+([PF_3(C_3F_7)_3]^-)$$

mit $M^+ = Cs^+$, $K^+$, $Na^+$, para-$Cl(C_6H_4)N_2^+$ oder para-$O_2N(C_6H_4)N_2^+$, ausgenommen sind (DE 100 558 12). Das Verfahren zur Herstellung dieser Fluoroalkylphosphat-Salze ist dadurch gekennzeichnet, daß wenigstens eine Verbindung

der allgemeinen Formel

$$H_rP(C_sH_{2s+1})_{3-r},$$

$$OP(C_sH_{2s+1})_3,$$

$$Cl_rP(C_sH_{2s+1})_{3-r},$$

$$F_rP(C_sH_{2s+1})_{3-r},$$

$$Cl_tP(C_sH_{2s+1})_{5-t}$$

und/oder

$$F_tP(C_sH_{2s+1})_{5-t},$$

in denen jeweils

$0 \leq r \leq 2$
$3 \leq s \leq 8$ und
$0 \leq t \leq 4$

bedeuten, durch Elektrolyse in Fluorwasserstoff fluoriert wird, das so erhaltene Gemisch der Fluorierungsprodukte aufgetrennt wird und das so erhaltene fluorierte Alkylphosphoran in einem aprotischen Lösungsmittel oder Lösungsmittelgemisch unter Feuchtigkeitsausschluß mit einer Verbindung der allgemeinen Formel $M^{n+}(F^-)_n$ worin $M^{n+}$ und n die oben angegebene Bedeutung haben, umgesetzt wird, und das so erhaltene Fluoroalkylphosphat-Salz nach den üblichen Methoden gereinigt und isoliert wird.

Die Additive können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten. Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. -oxihydroxide in das entsprechende Oxid übergeführt werden.

Die Additive können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Additive in Systemen mit Kathoden eingesetzt werden, die aus Lithium-Mischoxid-Partikeln bestehen, die mit Alkalimetallverbindungen und Metalloxiden ein- oder mehrfach beschichtet sind. Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen

Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Die Erfindung wird anhand der nachfolgenden Beispiele näher erläutert.

**Beispiel 1: Herstellung von Lithium-perfluorpinakolyl-tetrafluor-phosphonat (V)**

In einem aus PTFE bestehenden Reaktionsgefäß wird ein Gemisch aus 0,47 g (18 mmol) LiF und 9 ml Ethylencarbonat/Dimethylcarbonat (1:1) vorgelegt, danach werden 7,56 g (18 mmol) Perfluorpinakolyltrifluorphosphoran zugegeben. Das Gemisch wird unter Rühren 24 Stunden bei Raumtemperatur umgesetzt. Die dabei erhaltene, das erwünschte Lithiumsalz als Leitsalz enthaltende Lösung, kann direkt als Batterie-Elektrolyt verwendet werden.

**Beispiel 2: Messung der elektrochemischen Stabilität**

Unter Verwendung der Reaktionslösung aus Beispiel 1 als Elektrolyt werden in einer Messzelle mit Platinelektrode, Lithiumgegenelektrode und Lithiumreferenzelektrode jeweils 5 Zyklovoltammogramme hintereinander aufgenommen. Hierzu wird ausgehend vom Ruhepotential das Potential zuerst mit einer Vorschubgeschwindigkeit von 10 mV/s auf 6 V gegen $Li/Li^+$ erhöht, und im weiteren Verlauf zurück auf das Ruhepotential gefahren.

Hierbei wird der in Figur 1 gezeigte, charakteristische Verlauf erhalten. Selbst bei einem Potential von über 55 V gegen $Li/Li^+$ sind mit 50 $\mu A/cm^2$ sehr geringe Stromdichten zu erkennen. Der Elektrolyt ist somit für einen Einsatz in Lithiumionen-Batterien mit Übergangsmetallkathode geeignet.

**Beispiel 3: Herstellung von Lithium-bis(perfluorpinakolyl)-difluorphosphonat(V)**

In einem aus PTFE bestehenden Reaktionsgefäß wird ein Gemisch aus 0.26 g (10 mmol) LiF und 5 ml Ethylencarbonat/Dimethylcarbonat (1:1) vorgelegt, dann werden 7,14 g (10 mmol) Bis(perfluorpinakolyl)-fluorphosphoran zugegeben. Das Gemisch wird unter Rühren 24 Stunden bei Raumtemperatur umgesetzt. Die so erhaltene, das erwünschte Lithiumsalz als Leitsalz enthaltende Lösung kann direkt als Batterie-Elektrolyt verwendet werden.

**Beispiel 4: Messung der elektrochemischen Stabilität**

Unter Verwendung der Reaktionslösung aus Beispiel 3 als Elektrolyt werden in einer Messzelle mit Platinelektrode, Lithiumgegenelektrode und Lithiumreferenzelektrode jeweils 5 Zyklovoltammogramme hintereinander aufgenommen. Hierzu wird ausgehend vom Ruhepotential das Potential zuerst mit einer Vorschubgeschwindigkeit von 10 mV/s auf 6 V gegen $Li/Li^+$ erhöht, und im weiteren Verlauf zurück auf das Ruhepotential gefahren.

Hierbei wird der in Figur 2 gezeigte, charakteristische Verlauf erhalten. Selbst bei einem Potential von über 5,8 V gegen $Li/Li^+$ sind mit 50 $\mu A/cm^2$ sehr geringe Stromdichten zu erkennen. Der Elektrolyt ist somit für einen Einsatz in Lithiumionen-Batterien mit Übergangsmetallkathode geeignet.

## Patentansprüche

**1.** Lithiumsalze der allgemeinen Formel (I)

$$Li[P(OR^1)_a(OR^2)_b(OR^3)_c(OR^4)_dF_e] \qquad (I)$$

worin $0 < a+b+c+d \leq 5$ und $a+b+c+d+e = 6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, ausgenommen Lithium-perfluorpinakolyl-tetrafluorphosphonat (V).

**2.** Lithiumsalze nach Anspruch 1, wobei die Arylreste aus der Phenyl-, Naphthyl-, Anthracenyl- und Phenanthrenylreste umfassenden Gruppe gewählt sind.

**3.** Lithiumsalze nach Anspruch 1 und/oder 2, wobei die Heteroarylreste aus der Pyridyl-, Pyrazyl- und Pyrimidylreste umfassenden Gruppe gewählt sind.

**4.** Lithiumsalze nach mindestens einem der Ansprüche 1 bis 3, wobei die Alkyl, Aryl- oder Heteroarylreste mindestens einen Halogensubstituenten aufweisen.

**5.** Lithiumsalze nach mindestens einem der Ansprüche 1 bis 4, wobei die Aryl- oder Heteroarylreste mindestens einen Alkylsubstituenten mit 1 bis 6 Kohlenstoffatomen aufweisen.

**6.** Verfahren zur Herstellung von Lithiumsalzen der allgemeinen Formel (I) wie in Anspruch 1 definiert, durch Umsetzung einer Phosphor (V)-Verbindung der allgemeinen Formel (II)

$$P(OR^1)_a(OR^2)_b(OR^3)_c(OR^4)_dF_e \qquad \text{(II)}$$

worin $0 < a+b+c+d \leq 5$ und $a+b+c+d+e = 5$ gilt, und $R^1$ bis $R^4$ die in Anspruch 1 angegebenen Bedeutungen aufweisen, mit Lithiumfluorid in Gegenwart eines organischen Lösungsmittels.

**7.** Verfahren nach Anspruch 6, wobei die Umsetzung bei Temperaturen im Bereich von -20 bis 60 °C vorzugsweise 20 bis 25 °C während eines Zeitraums von 0,5 bis 36 Stunden, vorzugsweise etwa 24 Stunden, durchgeführt wird.

**8.** Verfahren nach Anspruch 6 und/oder 7, wobei das organische Lösungsmittel aus der Dimethylcarbonat, Diethylcarbonat, Propylencarbonat, Ethylencarbonat, Methylethylcarbonat, Methylpropylcarbonat, γ-Butyrolacton, Methylacetat, Ethylacetat, Methylpropionat, Ethylpropionat, Methylbutyrat, Ethylbutyrat, Dimethylsulfoxid, Dioxolan, Sulfolan, Acetonitril, Acrylnitril, Dimethoxyethan, 1,2-Butylencarbonat, 2,3-Butylencarbonat, 1,3-Dioxan, Aceton und Mischungen hiervon umfassenden Gruppe gewählt wird.

**9.** Verfahren nach mindestens einem der Ansprüche 6 bis 8 , wobei als organisches Lösungsmittel eine Mischung aus cyclischen und acyclischen Carbonaten verwendet wird.

**10.** Verfahren nach mindestens einem der Ansprüche 6 bis 9, wobei als organisches Lösungsmittel eine Mischung aus Ethylencarbonat und Diethylcarbonat und/oder Ethylmethylcarbonat verwendet wird.

**11.** Nichtwässriger Elektrolyt für eine elektrochemische Zelle, umfassend mindestens ein Lithiumsalz der allgemeinen Formel (I) wie in Anspruch 1 definiert einschließlich Lithium-perfluorpinakolyltetrafluorphosphonat sowie wahlweise mindestens ein organisches Lösungsmittel.

**12.** Nichtwässriger Elektrolyt für einen elektrochemische Zelle, umfassend eine gemäß dem Verfahren nach mindestens einem der Ansprüche 6 bis 10 erhaltene Reaktionsmischung.

**13.** Elektrochemische Zelle, insbesondere als Aufbaueinheit einer Lithiumionen-Batterie, umfassend eine Anode, eine Kathode und einen dazwischen angeordneten, nichtwässrigen Elektrolyten nach Anspruch 11 oder 12.

**14.** Verwendung eines Lithiumsalzes der allgemeinen Formel (I) wie in Anspruch 1 definiert oder eines nach dem Verfahren gemäß mindestens einem der Ansprüche 6 bis 10 erhaltenen Lithiumsalzes für elektrochemische Zellen, Supercapacitoren und Lithiumionen-Batterien.